# EUROPÄISCHE PATENTSCHRIFT

(11) **EP 1 789 180 B1**
(45) Veröffentlichungstag und Bekanntmachung des Hinweises auf die Patenterteilung: **20.01.2010**
(21) Anmeldenummer: 05769743.5
(22) Anmeldetag: 09.08.2005
(51) Int. Cl.: B01J 19/26, B01J 2/00, C08F 2/10, C08F 220/06, C08F 226/10

(54) **VERFAHREN ZUR HERSTELLUNG VON POLYMEREN DURCH SPRÜHPOLYMERISATION**
METHOD FOR PRODUCING POLYMERS BY DISPERSION POLYMERISATION
PROCEDE POUR PRODUIRE DES POLYMERES PAR POLYMERISATION PAR DISPERSION

(30) Priorität: 02.09.2004 DE 102004042948
(43) Veröffentlichungstag der Anmeldung: 30.05.2007
(73) Patentinhaber: BASF SE, 67056 Ludwigshafen (DE)
(72) Erfinder: LÖSCH, Dennis, 67122 Altrip (DE); WEIDL, Christian Hubert, 68167 Mannheim (DE); SEIDL, Volker, 68163 Mannheim (DE)
(86) Internationale Anmeldenummer: PCT/EP2005/008610
(87) Internationale Veröffentlichungsnummer: WO 2006/024369

(56) Entgegenhaltungen:
- EP-A- 0 191 877
- GB-A- 777 306
- US-A1- 2002 193 546

## Beschreibung

Die vorliegende Erfindung betrifft ein Verfahren zur Herstellung von Polymeren durch Sprühpolymerisation, deren Verwendung zur Verdickung von Flüssigkeiten sowie eine Vorrichtung zur Herstellung von Polymeren durch Sprühpolymerisation.

In der WO-A-99/14246 wird die Herstellung von Polymeren durch Emulsionspolymerisation in Gegenwart ionisierbarer Stabilisatoren beschrieben. Die Polymerdispersionen werden sprühgetrocknet. Die so erhaltenen Polymerpulver können als Verdicker oder Flockungshilfsmittel verwendet werden.

Die EP-A-0 398 151 beschreibt die Herstellung polymerer Verdicker durch Sprühtrocknung wässriger Polymerlösungen oder -dispersionen.

Die DE-A-195 06 287 beschreibt die Herstellung von Verdickungsmitteln für Druckpasten. Die Verdickungsmittel werden durch Emulsionspolymerisation hergestellt, azeotrop entwässert und filtriert.

In der FR-A-2 809 107 wird die azeotrope Entwässerung von Emulsionspolymerisaten beschrieben.

Die GB-A-0 777 306 beschreibt die Herstellung von Polymeren durch Sprühpolymerisation. Die Reaktion wird durch Amide, wie Acrylamid, Acetamid und partiell hydrolysiertes Polyacrylnitril, katalysiert. Die Polymere können auch als Verdicker für synthetische Harzdisperionen verwendet werden.

In der US-A-3,644,305 wird ein Sprühpolymerisationsverfahren offenbart mit dem niedermolekulare Polymere hergestellt werden können. Die Polymerisation wird bei erhöhtem Druck durchgeführt.

Gemäß der Patentanmeldung WO-A-96/40427 wird die Sprühpolymerisation in der Weise durchgeführt, dass Monomerlösungen in eine geheizte, im wesentlichen statische Atmosphäre verdüst werden. Dabei werden die Monomeren in den versprühten Tropfen polymerisiert und die Tropfen gleichzeitig getrocknet. Bei reduziertem Druck ist der Wassergehalt in den hergestellten Polymerkugeln deutlich verringert, die Polymerteilchen weisen aber eine rauhe Oberfläche auf. Bei erhöhtem Druck werden glatte Polymerkugeln erhalten. Die Anmeldung lehrt, dass die Partikelgröße über die Düsenöffnung eingestellt werden kann.

Aufgabe der vorliegenden Erfindung war die Bereitstellung eines verbesserten Verfahrens zur Herstellung von Polymeren.

Eine weitere Aufgabe der vorliegenden Erfindung war die Bereitstellung von Polymeren zur Verdickung von Flüssigkeiten.

Die Aufgabe wurde gelöst durch ein Verfahren zur Sprühpolymerisation einer Monomerdispersion, enthaltend
a) mindestens ein wasserlösliches ethylenisch ungesättigtes Monomeres, wobei die Löslichkeit des Monomeren a) in Wasser mindestens 1 g/100 g Wasser beträgt,
b) mindestens einen Initiator und
c) Wasser,
wobei die Monomerzusammensetzung zusätzlich mindestens eine hydrophobe, inerte Flüssigkeit d) enthält und wobei die Löslichkeit der Flüssigkeit d) in Wasser weniger als 5 g/100 g Wasser beträgt, die Flüssigkeit d) keine polymerisierbareen Gruppen enthält, die wässrige Phase in der Flüssigkeit d) dispergiert ist und die Reaktion bei 70 bis 250 °C in Gegenwart eines vor dem Reaktor auf Reaktionstemperatur vorgewärmten inerten Trägergases durchgeführt wird.

Als hydrophobe, inerte Flüssigkeit d) können praktisch alle mit Wasser nicht mischbaren Flüssigkeiten verwendet werden, die nicht in die Polymerisation eingreifen, d.h. keine polymerisierbaren Gruppen enthalten. Mit Wasser nicht mischbar bedeutet, dass die Löslichkeit der hydrophoben Flüssigkeit d) in Wasser weniger als 5 g/100 g, vorzugsweise weniger als 1 g/100 g, besonders bevorzugt weniger als 0,5 g/100 g, beträgt. Vorzugsweise verwendet man hierfür aliphatische und aromatische Kohlenwasserstoffe oder Mischungen aus aliphatischen und aromatischen Kohlenwasserstoffen. Geeignete aliphatische Kohlenwasserstoffe sind beispielsweise Pentan, Hexan, Heptan, Oktan, Nonan, Dekan, Cyclohexan, Dekalin, Methylcyclohexan, Isooktan und E-thylcyclohexan. Aromatische Kohlenwasserstoffe, die als hydrophobe Flüssigkeit verwendet werden können, sind beispielsweise Benzol, Toluol und Xylol. Daneben ist es selbstverständlich auch möglich halogenierte Kohlenwasserstoffe, wie Tetrachlorethan, Hexachlorethan, Trichlorethan und Chlorbenzol, zu verwenden. Vorzugsweise verwendet man Cyclohexan oder Kohlenwasserstoffe eines Siedebereichs von 60 bis 170°C. Der Anteil der hydrophoben Flüssigkeit beträgt 10 bis 80 Gew.-%, vorzugsweise 15 bis 75 Gew.-%, besonders bevorzugt 20 bis 70 Gew.-%.

Die Reaktion wird in Gegenwart eines inerten Trägergases durchgeführt, wobei inert bedeutet, dass das Trägergas mit den Bestandteilen der Monomerlösung nicht reagieren kann. Das inerte Trägergas ist vorzugsweise Stickstoff. Der Sauerstoffgehalt des inerten Trägergases beträgt vorteilhaft unter 1 Vol.-%, vorzugsweise unter 0,5 Vol.-%, besonders bevorzugt unter 0,1 Vol.-%.

Das inerte Trägergas kann im Gleichstrom oder im Gegenstrom zu den frei fallenden Tropfen der Monomerlösung durch den Reaktionsraum geführt werden, bevorzugt im Gleichstrom.

Die Gasgeschwindigkeit wird vorzugsweise so eingestellt, dass die Strömung im Reaktor gerichtet ist, beispielsweise liegen keine der allgemeinen Strömungsrichtung entgegengesetzte Konvektionswirbel vor, und beträgt beispielsweise 0,02 bis 1,5 m/s, bevorzugt 0,05 bis 0,4 m/s.

Die Reaktionstemperatur beträgt vorzugsweise 80 bis 190°C, besonders bevorzugt 90 bis 140°C.

Die Konzentration der Monomeren a) in der Monomerdispersion beträgt üblicherweise 2 bis 50 Gew.-%, vorzugsweise 5 bis 40 Gew.-%, besonders bevorzugt 10 bis 30 Gew.-%.

Die Löslichkeit der Monomeren a) in Wasser beträgt vorzugsweise mindestens 5 g/100 g Wasser, besonders bevorzugt mindestens 25 g/100 g Wasser, ganz besonders bevorzugt mindestens 50 g/100 g Wasser.

Ethylenisch ungesättigte Monomere a) sind beispielsweise ethylenisch ungesättigte C₃-C₆-Carbonsäuren. Bei diesen Verbindungen handelt es sich beispielsweise um Acrylsäure, Methacrylsäure, Ethacrylsäure, α-Chloracrylsäure, Crotonsäure, Maleinsäure, Maleinsäureanhydrid, Itaconsäure, Citraconsäure, Mesaconsäure, Glutaconsäure, Aconitsäure und Fumarsäure sowie die Alkali- oder Ammoniumsalze dieser Säuren.

Weitere Monomere a) sind Acrylamidopropansulfonsäure, Vinylphosphonsäure und/oder Alkali- bzw. Ammoniumsalze der Vinylsulfonsäure, wobei Säuren entweder in nicht neutralisierter Form oder in partiell bzw. bis zu 100 % neutralisierter Form eingesetzt werden.

Weiterhin kommen monoethylenisch ungesättigte Sulfon- oder Phosphonsäuren als Monomere a) in Betracht, beispielsweise Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Allylphosphonsäure, Styrolsulfonsäure und 2-Acrylamido-2-methylpropansulfonsäure.

Weitere Monomere a) sind beispielsweise Acrylamid, Methacrylamid, Crotonsäureamid, Acrylnitril, Methacrylnitril, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat sowie deren Quartemisierungsprodukte, beispielsweise mit Methylchlorid, Hydroxyethylacrylat, Hydroxyethylmethacrylat, Hydroxypropylacrylat und Hydroxypropylmethacrylat.

Weitere Monomere a) sind Monomere, die durch Umsetzung von stickstoffhaltigen Heterocyclen und/oder Carbonsäureamiden, wie Vinylimidazol, Vinylpyrazol sowie Vinylpyrrolidon, Vinylcaprolactam und Vinylformamid, mit Acetylen erhältlich sind, die auch quarternisiert sein können, beispielsweise mit Methylchlorid, und Monomere, die durch Umsetzung von stickstoffhaltigen Verbindungen, wie Diallyldimethylammoniumchlorid, mit Allylalkohol oder Allylchlorid erhältlich sind.

Desweiteren können auch Vinyl- und Allylester sowie Vinyl- und Allylether, wie Vinylacetat, Allylacetat, Methylvinylether und Methylallylether, als Monomere a) verwendet werden.

Die Monomeren a) können allein oder in Mischung untereinander eingesetzt werden, beispielsweise Mischungen, enthaltend zwei oder mehr Monomere a). Bevorzugt werden Mischungen mit zwei unterschiedlichen Monomeren a) eingesetzt.

Bevorzugte Monomere a) sind Acrylsäure, Methacrylsäure sowie die Alkali- oder Ammoniumsalze dieser Säuren, Acrylamid, Methacrylamid, Acrylnitril, Methacrylnitril, Itaconsäure, Vinylformamid, Vinylpyrrolidon, Vinylimidazol, quarternisiertes Vinylimidazol, Vinylacetat, Natriumvinylsulfonat, Vinylphosphonsäure, Hydroxyethylacrylat, Hydroxyethylmethacrylat, 2-Acrylamido-2-methylpropansulfonsäure, Diallyldimethylammoniumchlorid sowie deren Mischungen.

Die Monomeren a) sind vorzugsweise mit einem handelsüblichen Polymerisationsinhibitor stabilisiert, besonders bevorzugt mit einem Polymeriationsinhibitor, der nur zusammen mit Sauerstoff wirkt, beispielsweise Hydrochinomonomethylether.

Handelsübliche Polymerisationsinhibitoren sind Polymerisationsinhibitoren, die aus Gründen der Produktsicherheit als Lagerstabilisatoren in den jeweiligen Monomeren eingesetzt werden. Beispiele für solche Lagerstabilisatoren sind Hydrochinon, Hydrochinonmonomethylether, 2,5-Di-tert.-Butylhydrochinon und 2,6-Di-tert.-butyl-4-methylphenol.

Die bevorzugten Polymerisationsinhibitoren benötigen für eine optimale Wirkung gelösten Sauerstoff. Daher können die Polymerisationsinhibitoren vor der Polymerisation durch Inertisierung, d.h. Durchströmen mit einem inerten Gas, vorzugsweise Stickstoff, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, gesenkt.

Die Monomeren a) werden in Gegenwart von Initiatoren b) miteinander polymerisiert.

Die Initiatoren b) werden in üblichen Mengen eingesetzt, beispielsweise in Mengen von 0,001 bis 5 Gew.-%, vorzugsweise 0,01 bis 1 Gew.-%, bezogen auf die zu polymerisierenden Monomere.

Als Initiatoren b) können sämtliche unter den Polymerisationsbedingungen in Radikale zerfallende Verbindungen eingesetzt werden, beispielsweise Peroxide, Hydroperoxide, Wasserstoffperoxid, Persulfate, Azoverbindungen und die sogenannten Redoxinitiatoren. Bevorzugt ist der Einsatz von wasserlöslichen Initiatoren. In manchen Fällen ist es vorteilhaft, Mischungen verschiedener Initiatoren zu verwenden, beispielsweise Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden.

Geeignete organische Peroxide sind beispielsweise Acetylacetonperoxid, Methylethylketonperoxid, tert.-Butylhydroperoxid, Cumolhydroperoxid, tert.-Amylperpivalat, tert.-Butylperpivalat, tert.-Butylperneohexanoat, tert.-Butylperisobutyrat, tert.-Butyl-per-2-ethylhexanoat, tert.-Butylperisononanoat, tert.-Butylpermaleat, tert.-Butylperbenzoat, Di-(2-ethylhexyl)peroxydicarbonat, Dicyclohexylperoxydicarbonat, Di-(4-tert.-butylcyclohexyl)peroxydicarbonat, Dimyristilperoxydicarbonat, Diacetylperoxydicarbonat, Allylperester, Cumylperoxyneodecanoat, tert.-Butylper-3,5,5-trimethylhexanoat, Acetylcyclohexylsulfonylperoxid, Dilaurylperoxid, Dibenzoylperoxid und tert.-Amylpemeodekanoat.

Bevorzugte Initiatoren b) sind Azoverbindungen, beispielsweise 2,2'-Azobisisobutyronitril, 2,2'-Azobis(2,4-dimethylvaleronitril) und 2,2'-Azobis(4-methoxy-2,4-dimethylvaleronitril), insbesondere wasserlösliche Azostarter, beispielsweise 2,2'-Azobis{2-[1-(2-hydroxyethyl)-2-imidazolin-2-yl]propan}dihydrochlorid, 2,2'-Azobis-(2-amidinopropan)dihydrochlorid, 2,2'-Azobis[2-(2-imidazolin-2-yl)propan]dihydrochlorid und 2,2'-Azobis[2-(5-methyl-2-imidazolin-2-yl)propan]dihydrochlorid. Ganz besonders bevorzugt sind 2,2'-Azobis[2-(2-imidazolin-2-yl)propan]dihydrochlorid und 2,2'-Azobis[2-(5-methyl-2-imidazolin-2-yl)propan]dihydrochlorid.

Weiterhin bevorzugte Initiatoren b) sind außerdem Redoxinitiatoren. Die Redoxinitiatoren enthalten als oxidierende Komponente mindestens eine der oben angegebenen Peroxoverbindungen und als reduzierende Komponente beispielsweise Ascorbinsäure, Glukose, Sorbose, Ammonium- oder Alkalimetallhydrogensulfit, -sulfit, -thiosulfat, - hyposulfit, -pyrosulfit, -sulfid oder Natriumhydroxymethylsulfoxylat. Vorzugsweise verwendet man als reduzierende Komponente des Redoxkatalysators Ascorbinsäure oder Natriumpyrosulfit. Bezogen auf die bei der Polymerisation eingesetzte Menge an Monomeren verwendet man beispielsweise 1 x 10⁻⁵ bis 1 Mol-% der reduzierenden Komponente des Redoxkatalysators.

Besonders bevorzugt wird die Polymerisation durch Einwirkung energiereicher Strahlung ausgelöst, wobei man üblicherweise sogenannte Photoinitiatoren als Initiator b). Hierbei kann es sich beispielsweise um sogenannte α-Spalter, H-abstrahierende Systeme oder auch um Azide handeln. Beispiele für solche Initiatoren sind Benzophenon-Derivate wie Michlers-Keton, Phenanthren-Derivate, Fluoren-Derivate, AnthrachinonDerivate, Thioxanton-Derivate, Cumarin-Derivate, Benzoinether und deren Derivate, Azoverbindungen, wie die oben genannten Radikalbildner, substituierte Hexaarylbisimidazole oder Acylphosphinoxide, insbesondere 2-Hydroxy-2-methylpropiophenon (Darocure® 1173). Beispiele für Azide sind 2-(N,N-Dimethylamino)-ethyl-4-azidocinnamat, 2-(N,N-Dimethyl-amino)-ethyl-4-azidonaphthylketon, 2-(N,N-Dimethylamino)-ethyl-4-azidobenzoat, 5-Azido-1-naphthyl-2'-(N,N-dimethylamino)ethylsulfon, N-(4-Sulfonylazidophenyl)maleinimid, N-Acetyl-4-sulfonylazidoanilin, 4-Sulfonylazidoanilin, 4-Azidoanilin, 4-Azidophenacylbromid, p-Azidobenzoesäure, 2,6-Bis(p-azidobenzyliden)cyclohexanon und 2,6-Bis-(p-azidobenzyliden)-4-methylcyclohexanon.

Besonders bevorzugte Initiatoren b) sind Azoinitiatoren, wie 2,2'-Azobis[2-(2-imidazolin-2-yl)propan]dihydrochlorid und 2,2'-Azobis[2-(5-methyl-2-imidazolin-2-yl)propan]dihydrochlorid, und Photoinitiatoren, wie 2-Hydroxy-2-methylpropiophenon und 1-[4-(2-Hydroxyethoxy)-phenyl]-2-hydroxy-2-methyl-1-propan-1-on, Redoxinitiatoren, wie Natriumpersulfat/ Hydroxymethylsulfinsäure, Ammoniumperoxodisulfat/Hydroxymethylsulfinsäure, Wasserstoffperoxid/Hydroxymethylsulfinsäure, Natriumpersulfat/Ascorbinsäure, Ammoniumperoxodisulfat/Ascorbinsäure und Wasserstoffperoxid/Ascorbinsäure, Photoinitiatoren, wie 1-[4-(2-Hydroxyethoxy)-phenyl]-2-hydroxy-2-methyl-1-propan-1-on, sowie deren Mischungen.

Als Komponente c) enthält die Monomerdispersion Wasser.

Der pH-Wert der Monomerdispersion ist nicht entscheidend. Entsprechend der Produktanforderungen kann aber der pH-Wert des erfindungsgemäßen Polymeren über den pH-Wert der Monomerdispersion auf den gewünschten Bereich eingestellt werden. Beispielsweise sollten Polymere für kosmetische Anwendungen einen pH-Wert um 7 aufweisen.

Die Polymerisation der Monomere a) kann in Gegenwart eines Vernetzers oder einer Kombination verschiedener Vernetzer erfolgen. Vernetzer sind Verbindungen mit mindestens zwei polymerisierbaren Gruppen. Die Polymerisation in Gegenwart mindestens eines Vernetzers ist bevorzugt.

Die Konzentration der Vernetzer in der Monomerlösung beträgt üblicherweise 0,001 bis 1 Gew.-%, vorzugsweise 0,01 bis 0,5 Gew.-%.

Geeignete Vernetzer sind beispielsweise (Meth)acrylsäureester mehrwertiger Alkohole, die mit bis zu 100, meist bis zu 50, Ethylenoxid- und/oder Propylenoxideinheiten alkoxyliert sein können. Geeignete mehrwertige Alkohole sind insbesondere C₂-C₁₀-Alkanpolyole mit 2 bis 6 Hydroxylgruppen, wie Ethylenglykol, Glycerin, Trimethylolpropan, Pentaerythrit oder Sorbitol. Bevorzugte Vernetzer sind Polyethylenglykoldiacrylat und Polyethylenglykoldimethacrylate, die sich jeweils von Polyethylenglykolen (die als ethoxyliertes Ethylenglykol aufgefasst werden können) eines Molekulargewichts von 200 bis 2000 ableiten. Weitere verwendbare Vernetzer sind Methylenbisacrylamid, Trimethylolpropantriacrylat, Trimethylolpropantrimethacrylat, Ethylenglykoldiacrylat, Propylenglykoldiacrylat, Butandioldiacrylat, Hexandioldiacrylat, Hexandioldimethacrylat oder Diacrylate und Dimethacrylate von Blockcopolymerisaten aus Ethylenoxid und Propylenoxid.

Desweiteren kommen als Vernetzer Diallylcarbonat, Allylcarbonate oder Allylether mehrwertiger Alkohole, die mit bis zu 100, meist bis zu 50, Ethylenoxid- und/oder Propylenoxideinheiten alkoxyliert sein können, und Allylester mehrwertiger Carbonsäuren in Betracht.

Allylcarbonate mehrwertiger Alkohole entsprechen der allgemeinen Formel I 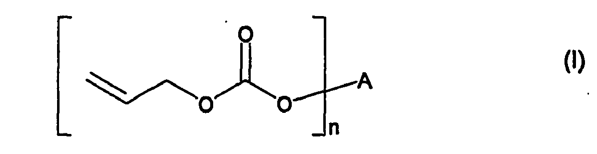 worin A für den Rest eines mehrwertigen Alkohols steht, der mit 0 bis 100, meist 0 bis 50, Ethylenoxid- und/oder Propylenoxideinheiten alkoxyliert sein kann; und n für die Wertigkeit des Alkohols, beispielsweise für eine ganze Zahl von 2 bis 10, vorzugsweise 2 bis 5, steht. Ein besonders bevorzugtes Beispiel einer derartigen Verbindung ist E-thylenglykoldi(allylcarbonat). Weiter eignen sich besonders Polyethylenglykol-di(allylcarbonate), die sich von Polyethylenglykolen eines Molekulargewichts von 200 bis 2000 ableiten.

Als bevorzugte Beispiele für Allylether lassen sich aufführen: Polyethylenglykoldiallylether, die sich von Polyethylenglykolen eines Molekulargewichts von 200 bis 2000 ableiten; Pentraerythrittriallylether oder Trimethylolpropandiallylether. Weiterhin geeignet sind Umsetzungsprodukte von Ethylenglykoldiglycidylether oder Polyethylenglykolglycidylether mit 2 Mol Allylalkohol und/oder Pentaerythritoltriallylether.

Ein geeigneter Allylester einer mehrwertigen Carbonsäure ist beispielsweise Diallylphthalat.

Um die wässrige Monomerphase im der hydophoben Flüssigkeit zu dispergieren, können die dafür bekannten Emulgatoren verwendet werden. Hierbei handelt es sich beispielsweise um Sorbitanester, wie Sorbitanmonostearat, Sorbitanmonooleat, Sorbitanpalmitat und Sorbitallaurat sowie um Glycerinester, deren Säurekomponente sich von C₁₄- bis C₂₀-Carbonsäuren ableitet.

Die Reaktion wird vorzugsweise in Apparaten durchgeführt, die auch für die Sprühtrocknung geeignet sind. Derartige Reaktoren werden beispielsweise in K. Masters, Spray Drying Handbook, 5th Edition, Longman, 1991, Seiten 23 bis 66, beschrieben.

Die im erfindungsgemäßen Verfahren können eine oder mehrere Sprühdüsen eingesetzt werden. Die einsetzbaren Sprühdüsen unterliegen keiner Beschränkung. Derartigen Düsen kann die zu versprühende Flüssigkeit unter Druck zugeführt werden. Die Zerteilung der zu versprühenden Flüssigkeit kann dabei dadurch erfolgen, dass sie nach Erreichen einer bestimmten Mindestgeschwindigkeit in der Düsenbohrung entspannt wird. Ferner können für den erfindungsgemäßen Zweck auch Einstoffdüsen, wie beispielsweise Schlitzdüsen oder Drallkammern (Vollkegeldüsen) verwendet werden (beispielsweise von Düsen-Schlick GmbH, DE, oder von Spraying Systems Deutschland GmbH, DE).

Erfindungsgemäß bevorzugt sind Vollkegeldüsen. Darunter sind solche mit einem Öffnungswinkel des Sprühkegels von 60 bis 180° bevorzugt. Besonders bevorzugt sind Öffnungswinkel von 90 bis 120°. Der sich beim Versprühen einstellende mittlere Tropfendurchmesser ist erfindungsgemäß typischerweise kleiner 1000 µm, vorzugsweise kleiner 200 µm, bevorzugt kleiner 100 µm, sowie üblicherweise größer 10 µm, vorzugsweise größer 20 µm, bevorzugt größer 50 µm, und kann nach üblichen Methoden, wie Lichtstreuung, oder anhand der bei den Düsenherstellern erhältlichen Kennlinien bestimmt werden. Der Durchsatz je Sprühdüse beträgt zweckmäßig 0,1 bis 10 m³/h, häufig 0,5 bis 5 m³/h.

Der sich beim Versprühen einstellende Tröpfchendurchmesser ist zweckmäßig von 10 bis 1.000 µm, bevorzugt von 50 bis 500 µm.

Die Reaktion kann auch in Apparaten durchgeführt werden in denen die Monomerdispersion in Form monodisperser Tropfen frei fallen kann. Geeignet dazu sind Apparaturen, wie sie beispielsweise in der Patentschrift US-A-5,269,980, Spalte 3, Zeilen 25 bis 32, beschrieben sind.

Eine Vertropfung durch laminaren Strahlzerfall, wie in Rev. Sci. Instr., Band 38 (1966), Seiten 502 bis 506, beschrieben, ist ebenfalls möglich.

Die Verwendung von Sprühdüsen zur Tropfenerzeugung ist bevorzugt.

Die hydrophobe Flüssigkeit d) wird weniger als 30 Sekunden, besonders bevorzugt weniger als 10 Sekunden, vor dem Versprühen in den Reaktor mit den anderen Komponenten vermischt. In diesem Fall kann auf eine Stabilisierung der Dispersion verzichtet werden oder zumindest die Emulgatormenge deutlich reduziert werden.

Als Mischeinrichtung werden statische Mischer verwendet.

Die Reaktion kann im Überdruck oder im Unterdruck durchgeführt werden, ein Unterduck von bis zu 100 mbar gegenüber dem Umgebungsdruck ist bevorzugt.

Der Polymerisationsreaktor wird vorzugsweise von einem Trägergas durchströmt. Bevorzugt ist die Gleichstromfahrweise, das heißt, das Trägergas durchströmt den Polymerisationsreaktor von oben nach unten.

Die Polymerisationsgeschwindigkeit und die Trockengeschwindigkeit weisen üblicherweise unterschiedliche Temperturabhängigkeiten auf. Dies kann beispielsweise bedeuten, dass die versprühten Tropfen trocknen bevor der gewünschte Umsatz erreicht worden ist. Daher ist es vorteilhaft die Reaktionsgeschwindigkeit und die Trockengeschwindigkeit getrennt zu beeinflussen.

Die Trockengeschwindigkeit kann über den Wasserdampfgehalt des Trägergases beeinflusst werden. Der Wasserdampfgehalt des Trägergases beträgt im allgemeinen bis 90 Vol.-%, vorzugsweise bis 50 Vol.-%.

Vorteilhaft ist die Verwendung von Azoverbindungen oder Redoxinitiatoren als Initiatoren b). Das Anspringverhalten der Polymerisation läßt sich mit Azoverbindungen über Auswahl des Initiators, Initiatorkonzentration und Reaktionstemperatur besser steuern als beispielsweise mit reinen Peroxidinitiatoren.

Das Trägergas wird zweckmäßigerweise vor dem Reaktor auf die Reaktionstemperatur von 70 bis 250°C, vorzugsweise 80 bis 190°C, besonders bevorzugt 90 bis 140°C, vorgewärmt.

Das Reaktionsabgas, d.h. das der Reaktionsraum verlassende Trägergas, kann beispielsweise in einem Wärmeaustauscher abgekühlt werden. Dabei kondensieren Wasser und nicht umgesetztes Monomer. Danach kann das Reaktionsabgas zumindest teilweise wieder aufgewärmt und als Kreisgas in den Reaktor zurückgeführt werden. Vorzugsweise wird das Kreisgas so abgekühlt, dass das abgekühlte Kreisgas den für die Reaktion gewünschten Anteil an Wasserdampf hat. Ein Teil des Reaktionsabgases kann ausgeschleust und durch frisches Trägergas ersetzt werden, wobei im Reaktionsabgas enthaltene nicht umgesetzte Monomere abgetrennt und rückgeführt werden können.

Besonders bevorzugt ist ein Wärmeverbund, dass heißt, ein Teil der Abwärme beim Abkühlen des Abgases wird zum Aufwärmen des Kreigases verwendet.

Der Reaktionsraum kann begleitbeheizt werden. Die Begleitheizung wird dabei so eingestellt, dass die Wandtemperatur mindestens 5°C oberhalb der Reaktorinnentemperatur liegt und die Kondensation an den Reaktorwänden zuverlässig vermieden wird.

Das Reaktionsprodukt fällt in Form rieselfähiger Polymerpartikel an und kann dem Reaktionsraum in üblicher Weise entnommen werden, vorzugsweise am Boden über eine Förderschnecke, und gegebenenfalls bis zur gewünschten Restfeuchte und zum gewünschten Restmonomerengehalt weiter getrocknet werden.

Vorzugsweise weisen mindestens 95 Gew.-% des partikulären Polymeren einen Partikeldurchmesser (Korngröße) von 5 bis 1000 µm, vorzugsweise 10 bis 500 µm, auf, wobei es sich insbesondere bei größeren Partikeldurchmessern um Agglomerate deutlich kleinerer Primärpartikel handelt. Die Partikelgrößenverteilung kann nach üblichen Methoden bestimmt werden, beispielsweise analog zur von der EDANA (European Disposables and Nonwovens Association) empfohlenen Testmethode Nr. 420.2-02 "Particle Size Distribution - Sieve Fraction".

Ein weiterer Gegenstand der vorliegenden Erfindung ist eine Vorrichtung zur Herstellung von Polymeren durch Sprühpolymerisation, umfassend
i) einen beheizbaren Reaktionsraum,
ii) mindestens eine Vorrichtung zur Tropfenerzeugung im oberen Bereich des Reaktionsraumes i),
iii) mindestens eine Trägergaszuführung im oberen Teil des Reaktionsraumes i),
iv) mindestens eine Trägergasvorheizung,
v) mindestens eine Trägergasabführung im unteren Teil des Reaktionsraumes i),
vi) mindestens ein Mittel zu Rückführung zumindest eines Teil des abgeführten Trägergases aus der Trägergasabführung v) zur Trägergaszuführung iii),
vii) mindestens eine eine Fördereinrichtung im unteren Bereich des Reaktionsraumes i) zum Produktaustrag,
viii) mindestens einen statischen Mischer vor der Vorrichtung zur Tropfenerzeugung ii) und
ix) gegebenenfalls mindestens eine Strahlenquelle im oberen Teil des Reaktionsraumes i),
wobei der obere Bereich des Reaktionsraumes die oberen 30%, vorzugsweise die oberen 20%, besonders die oberen 10%, des Reaktionraumvolumens und der untere Bereich des Reaktionsraumes die unteren 30%, vorzugsweise die unteren 20%, besonders die unteren 10%, des Reaktionraumvolumens sind.

Statische Mischer enthalten kleine bewegten Teile. Die Mischung, beispielsweise zwei-' er Flüssigkeiten, erfolgt durch Umlenkung eines strömenden Systems. Statische Mischer können beispielsweise in Rohrleitungssegmenten enthaltene Gewebepackungen sein. Die notwendige Mischenergie wird durch den durch die Gewebepackung verursachte Druckverlust aufgebracht. dies bedeutet, dass die Mischleistung von der Strömungsgeschwindigkeit abhängt.

Das erfindungsgemäße Verfahren kombiniert in vorteilhafter Weise die Herstellung einer Polymerdispersion mit der Trocknung dieser Dispersion in einem Schritt, wobei die Polymerisationswärme gleichzeitig zur Trocknung verwendet werden kann. Beim Trocknen agglomerieren die in einem Tropfen enthaltenen Primärteilchen. Die erfindungsgemäßen Polymerpulver sind leicht redispergierbar und schnell löslich.

Die nach dem erfindungsgemäßen Verfahren herstellbaren Polymere eignen sich zum Verdicken von Flüssigkeiten, insbesondere wässriger Systeme, sowie als Absorptionsmittel in Hygieneartikeln.

Unvernetzte Polymere lösen sich in Wasser, während die in Gegenwart von Vernetzern hergestellten Polymere stark quellen und ebenfalls die Viskosität des wässrigen Medium stark erhöhen. So haben beispielsweise 1 gew.-%ige wässrige Lösungen der Polymeren bei pH 7 eine Viskosität von 6.000 bis 8.000 mPas (gemessen in einem Brookfield-Viskosimeter, Spindel 6, bei 20°C).

Die erfindungsgemäßen Polymere können als Verdickungsmittel für wässrige Systeme verwendet werden, beispielsweise als Zusatz zu Papierstreichmassen, als Verdickungsmittel für Pigmentdruckpasten und als Zusatz zu wässrigen Farben wie Fassadenfarben. Sie sind außerdem in der Kosmetik einsetzbar, beispielsweise in haarkosmetischen Zubereitungen wie Conditioner oder Haarfestiger oder als Verdicker für Kosmetikformulierungen sowie für die Oberflächenbehandlung von Leder.

Die Viskosität 2 gew.-%iger wässriger Lösungen, enthaltend nach dem erfindungsgemäßen Verfahren hergestellter Polymere, beträgt bei 23°C mindestens 1.000 mPas, vorzugsweie mindestens 2.000 mPas, besonders bevorzugt mindestens 5.000 mPas.

### Beispiele:

### Beispiel 1

Innerhalb einer Stunde wurde die wässrige Phase, bestehend aus 1,1 kg Vinylpyrrolidon, 1,777 kg 45gew.-%iges mit Methylchlorid quarternisiertes Vinylimidazol, 100 g Vinylcaprolactam, 20 g Divinylethylenharnstoff, 2 g Natriumdihydrogenphosphat, 303 g einer 0,1 molaren Natronlauge und 680 g Wasser, unter Rühren und bei 23°C in der organischen Phase, bestehend aus 8 kg Cyclohexan, 50 g Hypermer® B246 (Tensid der ICI Surfantance, US) und 50 g Span® 80 (Tensid der ICI Surfantance, US), emulgiert. Anschließend wurde für 30 Minuten Stickstoff durch die Emulsion geleitet. 10 kg/h der Emulsion wurden zusammen mit 100 g/h einer 10gew.-%igen wässrigen Lösung von 2,2'-Azobis[2-(2-imidazolin-2-yl)propan]dihydrochlorid (Azoinitiator V44 der Wako Deutschland, DE) über einen statischen Mischer in einem erwärmten, mit Stickstoffatmosphäre gefüllten Sprühturm (150°C, 8m Höhe, 2m Breite, Gasgeschwindigkeit 0,1 m/s im Gleichstrom) vertropft. Die monodispersen Tropfen hatten einen Durchmesser von 400 µm. Am Boden des Sprühturms wurde ein trockenes, weißes Pulver erhalten. Die durchschnittliche Korngröße betrug 90 µm. Dieses Pulver ließ sich in Wasser klar lösen. Die 1 gew.-%ige Lösung hat einen pH-Wert von 7 und eine Viskosität von 6.000 mPas.

### Beispiel 2

Innerhalb einer Stunde wurde die wässrige Phase, bestehend aus 1,5 kg Vinylpyrrolidon, 3,33 kg mit Methylchlorid quarternisiertes Vinylimidazol, 6 g Divinylethylenharnstoff, 108 g 10gew.-%ige Natronlauge und 1,86 kg Wasser, unter Rühren und bei 23°C in der organischen Phase, bestehend aus 4,878 kg Cyclohexan, 300 g 20gew.-%iges Hypermer® B246 (Tensid der ICI Surfantance, US) und 120 g Span® 80 (Tensid der ICI Surfantance, US), emulgiert. Anschließend wurde für 30 Minuten Stickstoff durch die Emulsion geleitet. 10 kg/h der Emulsion wurden zusammen mit 100 g/h einer 10gew.-%igen wässrigen Lösung von 2,2'-Azobis[2-(2-imidazolin-2-yl)propan]dihydrochlorid (Azoinitiator V44 der Wako Deutschland, DE) über einen statischen Mischer in einem erwärmten, mit Stickstoffatmosphäre gefüllten Sprühturm (150°C, 8m Höhe, 2m Breite, Gasgeschwindigkeit 0,1 m/s im Gleichstrom) vertropft. Die monodispersen Tropfen hatten einen Durchmesser von 400 µm. Am Boden des Sprühturms wurde ein trockenes, weißes Pulver erhalten. Die durchschnittliche Korngröße betrug 120 µm. Dieses Pulver ließ sich in Wasser klar lösen. Die 1 gew.-%ige Lösung hat einen pH-Wert von 7 und eine Viskosität von 8.000 mPas.

### Beispiel 3

Innerhalb einer Stunde wurde die wässrige Phase, bestehend aus Ammoniumacrylatlösung (hergestellt aus 4 kg Acrylsäure, 5,46 kg Wasser und 3,8 kg 25gew.-%iger Ammoniaklösung), 1 kg 50gew.-%ige wässriges Acrylamid, 0,36 kg 1gew.-%iges Methylenbisacrylamid und 0,1kg Rongalit C (Hydroxymethylsulfinsäure der Brüggemann Deutschland, DE) unter Rühren und bei 23°C in der organischen Phase, bestehend aus 4 kg Shellsol K (Mineralöl der Shell Deutschland, DE) und 0,4 kg Span® 80 (Tensid der ICI Surfantance, US), emulgiert. Anschließend wurde für 30 Minuten Stickstoff durch die Emulsion geleitet. Die Emulsion wurde zusammen mit der Initiatorlösung über einen statischen Mischer in einem erwärmten, mit Stickstoffatmosphäre gefüllten Sprühturm (140°C, 8m Höhe, 2m Breite, Gasgeschwindigkeit 0,1 m/s im Gleichstrom) versprüht. Insgesamt wurden 0,2 kg 10gew.-%iges wässriges Natriumpersulfat und 0,1 kg 5gew.-%iges wässriges 2,2'-Azobis[2-(2-imidazolin-2-yl)propan]dihydrochlorid (Azoinitiator V44 der Wako Deutschland, DE) als Initiatorlösung eingesetzt. Am Boden des Sprühturms wurde ein trockenes, weißes Pulver erhalten. Die durchschnittliche Korngröße betrug 25 µm. Dieses Pulver ließ sich in Wasser klar lösen. Die 1 gew.-%ige Lösung hat einen pH-Wert von 7 und eine Viskosität von 8.000 mPas.

### Beispiel 4

Innerhalb einer Stunde wurde die wässrige Phase, bestehend aus Natriumacrylatlösung (hergestellt aus 4,5 kg Acrylsäure, 6,45 kg Wasser und 5 kg 50gew.-%iger Natronlauge) und 0,1kg Rongalit C (Hydroxymethylsulfinsäure der Brüggemann Deutschland, DE), unter Rühren und bei 23°C in der organischen Phase, bestehend aus 4 kg Shellsol K (Mineralöl der Shell Deutschland, DE) und 0,5 kg Emulan® GOE (Emulgator der BASF Aktiengesellschaft, DE), emulgiert. Anschließend wurde für 30 Minuten Stickstoff durch die Emulsion geleitet. Die Emulsion wurde zusammen mit der Initiatorlösung über einen statischen Mischer in einem erwärmten, mit Stickstoffatmosphäre gefüllten Sprühturm (140°C, 8m Höhe, 2m Breite, Gasgeschwindigkeit 0,1 m/s im Gleichstrom) versprüht. Insgesamt wurden 0,2 kg 10gew.-%iges wässriges Natriumpersulfat und 0,1 kg 5gew.-%iges wässriges 2,2'-Azobis[2-(2-imidazolin-2-yl)propan]dihydrochlorid (Azoinitiator V44 der Wako Deutschland, DE) als Initiatorlösung eingesetzt. Am Boden des Sprühturms wurde ein trockenes, weißes Pulver erhalten. Die durchschnittliche Korngröße betrug 25 µm. Dieses Pulver ließ sich in Wasser klar lösen. Die 1 gew.-%ige Lösung hat einen pH-Wert von 7 und eine Viskosität von 7.500 mPas.

### Beispiel 5

Innerhalb einer Stunde wurde die wässrige Phase, bestehend aus Ammoniumacrylatlösung (hergestellt aus 4,3 kg Acrylsäure, 5,2 kg Wasser und 4,7 kg 50gew.%iger Natronlauge), 0,36 kg 1gew.%iges Methylenbisacrylamid und 0,1kg Ameisensäure, unter Rühren und bei 23°C in der organischen Phase, bestehend aus 4 kg Isopar® G (Mineralöl der Exxon Mobile Chemical Europe, DE) und 0,4 kg Isolan® PDI (Emulgator der Goldsschmidt Deutschland, DE), emulgiert. Anschließend wurde für 30 Minuten Stickstoff durch die Emulsion geleitet. Die Emulsion wurde zusammen mit der Initiatorlösung über einen statischen Mischer in einem erwärmten, mit Stickstoffatmosphäre gefüllten Sprühturm (140°C, 8m Höhe, 2m Breite, Gasgeschwindigkeit 0,1 m/s im Gleichstrom) versprüht. Insgesamt wurden 0,1 kg 10gew.-%iges wässriges 2,2'-Azobis(2-amidinopropan)dihydrochlorid (Azoinitiator V50 der Wako Deutschland, DE) als Initiatorlösung eingesetzt. Am Boden des Sprühturms wurde ein trockenes, weißes Pulver erhalten. Die durchschnittliche Korngröße betrug 25 µm. Dieses Pulver ließ sich in Wasser klar lösen. Die 1 gew.-%ige Lösung hat einen pH-Wert von 7 und eine Viskosität von 6.000 mPas.

### Beispiel 6

Innerhalb einer Stunde wurde die wässrige Phase, bestehend aus Ammoniumacrylatlösung (hergestellt aus 4,3 kg Acrylsäure, 10,2 kg Wasser und 0,3 kg 50gew.-%iger Natronlauge), 0,36 kg 1gew.-%iges Methylenbisacrylamid und 0,1kg Ameisensäure, unter Rühren und bei 23°C in der organischen Phase, bestehend aus 4 kg Isopar®G (Mineralöl der Exxon Mobile Chemical Europe, DE) und 0,4 kg Isolan® PDI (Emulgator der Goldsschmidt Deutschland, DE), emulgiert. Anschließend wurde für 30 Minuten Stickstoff durch die Emulsion geleitet. Die Emulsion wurde zusammen mit der Initiatorlösung über einen statischen Mischer in einem erwärmten, mit Stickstoffatmosphäre gefüllten Sprühturm (110°C, 8m Höhe, 2m Breite, Gasgeschwindigkeit 0,1 m/s im Gleichstrom) versprüht. Insgesamt wurden 0,1 kg 10gew.-%iges wässriges 2,2'-Azobis(2-amidinopropan)dihydrochlorid (Azoinitiator V50 der Wako Deutschland, DE) als Initiatorlösung eingesetzt. Am Boden des Sprühturms wurde ein trockenes, weißes Pulver erhalten. Die durchschnittliche Korngröße betrug 25 µm. Dieses Pulver ließ sich in Wasser klar lösen. Die 1 gew.-%ige Lösung hat einen pH-Wert von 7 und eine Viskosität von 6.000 mPas.

## Patentansprüche

1. Verfahren zur Herstellung von Polymeren durch Sprühpolymerisation einer Monomerzusammensetzung, enthaltend
a) mindestens ein wasserlösliches ethylenisch ungesättigtes Monomer, wobei die Löslichkeit des Monomeren a) in Wasser mindestens 1 g/100 g Wasser beträgt,
b) mindestens einen Initiator und
c) Wasser,
**dadurch gekennzeichnet, dass** die Monomerzusammensetzung zusätzlich mindestens eine hydrophobe, inerte Flüssigkeit d) enthält und wobei die Löslichkeit der Flüssigkeit d) in Wasser weniger als 5 g/100 g Wasser beträgt, die Flüssigkeit d) keine polymerisierbaren Gruppen enthält, die wässrige Phase in der Flüssigkeit d) dispergiert ist, die hydrophobe Flüssigkeit d) weniger als 30 Sekunden vor dem Versprühen in den Reaktor mit den übrigen Komponenten mittels eines statischen Mischers vermischt wird und die Reaktion bei 70 bis 250°C in Gegenwart eines vor dem Reaktor auf Reaktionstemperatur vorgewärmten inerten Trägergases durchgeführt wird.

2. Verfahren gemäß Anspruch 1, **dadurch gekennzeichnet, dass** die hydrophobe Flüssigkeit d) weniger als 10 Sekunden vor dem Versprühen in den Reaktor mit den übrigen Komponenten vermischt wird.

3. Verfahren gemäß Anspruch 1 oder 2, **dadurch gekennzeichnet, dass** die Reaktion bei einem Unterduck von bis zu 100 mbar gegenüber dem Umgebungsdruck durchgeführt wird.

4. Verfahren gemäß einem der Ansprüche 1 bis 3, **dadurch gekennzeichnet, dass** die mindestens eine hydrophobe Flüssigkeit Cyclohexan oder ein Mineralöl ist.

5. Verfahren gemäß einem der Ansprüche 1 bis 4, **dadurch gekennzeichnet, dass** der mindestens eine Initiator c) mindestens eine Azoverbindung und/oder ein Redoxinitiator ist.

6. Verfahren gemäß einem der Ansprüche 1 bis 5, **dadurch gekennzeichnet, dass** das mindestens eine Monomere a) Acrylsäure, Vinylpyrrolidon, quarternisiertes Vinylimidazol, Acrylamid, quarternisiertes Dimethylaminoethylacrylat und/oder Diallyldimethylammoniumchlorid ist.

7. Vorrichtung zur Sprühpolymerisation, **dadurch gekennzeichnet, dass** die Vorrichtung
i) einen beheizbaren Reaktionsraum,
ii) mindestens eine Vorrichtung zur Tropfenerzeugung im oberen Bereich des Reaktionsraumes i),
iii) mindestens eine Trägergaszuführung im oberen Teil des Reaktionsraumes i),
iv) mindestens eine Trägergasvorheizung,
v) mindestens eine Trägergasabführung im unteren Teil des Reaktionsraumes i),
vi) mindestens ein Mittel zu Rückführung zumindest eines Teil des abgeführten Trägergases aus der Trägergasabführung v) zur Trägergaszuführung iii),
vii) mindestens eine Fördereinrichtung im unteren Bereich des Reaktionsraumes i) zum Produktaustrag und
viii) mindestens einen statischen Mischer vor der Vorrichtung zur Tropfenerzeugung ii)
umfasst, wobei der obere Bereich des Reaktionsraumes die oberen 30% des Reaktionraumvolumens und der untere Bereich des Reaktionsraumes die unteren 30% des Reaktionraumvolumens sind.

8. Vorrichtung gemäß Anspruch 7, **dadurch gekennzeichnet, dass** die Vorrichtung mindestens eine Strahlenquelle im oberen Teil des Reaktionssraumes i) umfasst.

## Claims

1. A process for producing a polymer by spray polymerization of a monomer, composition comprising
a) at least one water soluble ethylenically unsaturated monomer, the solubility of the monomer a) in water being not less than 1 g/100 g of water,
b) at least one initiator and
c) water,
wherein the monomer composition further comprises at least one hydrophobic, inert liquid d), the solubility of liquid d) in water being less than 5 g/100 g of water, the liquid d) comprising no polymerizable groups, the aqueous phase having been dispersed in the liquid d), the hydrophobic liquid d) being mixed with the other components by means of a static mixer less than 30 seconds before spraying into the reactor and the reaction being carried out at 70 to 250°C in the presence of an inert carrier gas which is preheated to the reaction temperature upstream of the reactor.

2. The process according to claim 1 wherein the hydrophobic liquid d) is mixed with the other components less than 10 seconds before spraying into the reactor.

3. The process according to claim 1 or 2 wherein the reaction is carried out at an underpressure of up to 100 mbar below ambient.

4. The process according to any one of claims 1 to 3 wherein the at least one hydrophobic liquid is cyclohexane or a mineral oil.

5. The process according to any one of claims 1 to 4 wherein the at least one initiator c) is at least one azo compound and/or a redox initiator.

6. The process according to any one of claims 1 to 5 wherein the at least one monomer a) is acrylic acid, vinylpyrrolidone, quaternized vinylimidazole, acrylamide, quaternized dimethylaminoethyl acrylate and/or diallyldimethylammonium chloride.

7. Apparatus for spray polymerization comprising
i) a heatable reaction space,
ii) at least one apparatus for droplet generation in the upper region of the reaction space i),
iii) at least one carrier gas feed in the upper portion of the reaction space i),
iv) at least one carrier gas preheater,
v) at least one carrier gas outlet in the lower portion of the reaction space i),
vi) at least one means for recycling at least one portion of the removed carrier gas from the carrier gas outlet v) to the carrier gas feed iii),
vii) at least one conveying means in the lower region of the reaction space i) for product discharge, and
viii) at least one static mixer upstream of the apparatus for droplet generation ii),
the upper region of the reaction space being the upper 30% of the reaction space volume and the lower region of the reaction space being the lower 30% of the reaction space volume.

8. The apparatus according to claim 7 that comprises at least one source of radiation in the upper portion of the reaction space i).

## Revendications

1. Procédé pour la préparation de polymères par polymérisation par pulvérisation d'une composition de monomères, contenant
a) au moins un monomère éthyléniquement insaturé soluble dans l'eau, la solubilité du monomère a) dans l'eau étant d'au moins 1 g/100 g d'eau,
b) au moins un initiateur et
c) de l'eau,
**caractérisé en ce que** la composition de monomères contient en outre au moins un liquide hydrophobe inerte
d) et la solubilité du liquide d) dans l'eau étant inférieure à 5 g/100 g d'eau, le liquide d) ne contenant pas de groupes polymérisables, la phase aqueuse étant dispersée dans le liquide d), le liquide hydrophobe d) est mélangé moins de 30 secondes avant la pulvérisation dans le réacteur avec les autres composants au moyen d'un mélangeur statique et la réaction est réalisée à 70 jusqu'à 250°C en présence d'un gaz support inerte préchauffé en amont du réacteur à la température de réaction.

2. Procédé selon la revendication 1, **caractérisé en ce que** le liquide hydrophobe d) est mélangé dans le réacteur avec les autres composants moins de 10 secondes avant la pulvérisation.

3. Procédé selon la revendication 1 ou 2, **caractérisé en ce que** la réaction est réalisée à une dépression jusqu'à 100 mbars par rapport à la pression atmosphérique.

4. Procédé selon l'une quelconque des revendications 1 à 3, **caractérisé en ce que** ledit au moins un liquide hydrophobe est du cyclohexane ou une huile minérale.

5. Procédé selon l'une quelconque des revendications 1 à 4, **caractérisé en ce que** ledit au moins un initiateur c) est au moins un composé azo et/ou un initiateur redox.

6. Procédé selon l'une quelconque des revendications 1 à 5, **caractérisé en ce que** ledit au moines un monomère a) est l'acide acrylique, la vinylpyrrolidone, le vinylimidazole quaternisé, l'acrylamide, l'acrylate de diméthylaminoéthyle quaternisé et/ou le chlorure de diallyldiméthylammonium.

7. Dispositif pour la polymérisation par pulvérisation **caractérisé en ce que** le dispositif comprend
i) un espace de réaction pouvant être chauffé,
ii) au moins un dispositif de génération de gouttes dans la partie supérieure de l'espace de réaction i),
iii) au moins une alimentation pour le gaz support dans la partie supérieure de l'espace de réaction i),
iv) au moins un préchauffage pour le gaz support,
v) au moins une évaluation pour le gaz support dans la partie inférieure de l'espace de réaction i),
vi) au moins un moyen pour le recyclage d'au moins une partie du gaz support évacué de l'évacuation du gaz support v) dans l'alimentation du gaz support iii),
vii) au moins un dispositif de transport dans la zone inférieure de l'espace de réaction i) pour l'évacuation du produit et
viii) au moins un mélangeur statique en amont du dispositif de génération de gouttes ii)
où la zone supérieure de l'espace de réaction réside dans les 30% supérieurs du volume de l'espace de réaction et la zone inférieure de l'espace de réaction réside dans les 30% inférieurs du volume de l'espace de réaction.

8. Dispositif selon la revendication 7, **caractérisé en ce que** le dispositif comprend au moins une source de rayonnement dans la partie supérieure de l'espace de réaction i).
